# EUROPEAN PATENT APPLICATION

(11) **EP 2 522 215 A1**
(43) Date of publication of application: **14.11.2012**
(21) Application number: 12157858.7
(22) Date of filing: 02.03.2012
(51) Int. Cl.: A01G 25/16

(54) **Remote control irrigation system**

(30) Priority: 10.05.2011 IT MI20110803
(71) Applicant: CLABER S.P.A., 33080 Fiume Veneto (PN) (IT)
(72) Inventor: Brundisini, Andrea, 33170 Pordenone (IT)
(74) Representative: Mittler, Enrico

(57) **Abstract**

The object of the present invention is a remote control irrigation system which comprises a centralized radio control programmer (P) adapted to generate radiofrequency programming controls and a plurality of programmable units (RF VPR) provided with a radiofrequency control module (MC) adapted to receive and execute said programming commands and to communicate its status to said centralized programmer (P). The system is further provided with at least one radiofrequency rain sensor (SP) associated with said programmable units (RF VPR) in a dedicated or universal manner.

## Description

The present invention relates to a remote control irrigation system.

The maintenance of lawns and gardens by means of centralized systems that control the time and frequency of irrigation cycles allows water consumption to be reduced and the health condition of the lawn grass and garden plants to be preserved also when not present to activate the systems.

Systems are already known for large sized spaces wherein a plurality of programmable control units and/or solenoid valves provides for the management of the irrigation time and frequency of single sectors of the areas to be irrigated.

This requires the need of individually programming the various control units of the system with consequent undesirably long intervention times.

Centralized systems are also known wherein a single control unit provides for the remote control of various sectors of the irrigation system but not to the independent remote programming thereof.

The object of the present invention is to provide a remote control irrigation system which should allow the independent remote programming of a plurality of units designed for controlling the irrigation of respective sectors of an area to be irrigated.

According to the present invention, such object is achieved with a remote control irrigation system **characterized in that** it comprises a centralized radio control programmer adapted to generate radiofrequency programming controls and a plurality of programmable units provided with a radiofrequency control module adapted to receive and execute said programming commands and to communicate its status to said centralized programmer.

Preferably, the irrigation system according to the present invention is provided with at least one rain sensor provided with a radiofrequency communication module, which can communicate with the control modules of the programmable units for informing them about the rain or dry status within its area, so that in the event of rain the control modules involved may interrupt the irrigation.

Choosing radiofrequency as control transmission vehicle allows the centralized programmer or radio control and the radiofrequency rain sensor to remotely communicate with the programmable units even if they are in hidden or not very accessible positions, for example within water distribution pits of the irrigation system.

The free frequency at 433.092 MHz is preferably used, with the respective power constraints, less than 10 mW, and ratio between the transmission period and that of usage, or duty cycle, less than 10%.

Since such frequency is less directive and more appropriate for overcoming obstacles compared to other free frequencies, it is accordingly the most suitable for the type of application wherein, among the other things, the exact position of the programmable unit and of its control unit may be unknown.

A non limiting example of a radiofrequency irrigation system according to the present invention is shown in the annexed drawings, wherein:
figure 1 shows the general layout of a radiofrequency irrigation system according to the invention;
figure 2 shows a plan view of a centralized programmer for said system;
figure 3 shows an enlarged scale of the symbols associated with the display of said centralized programmer;
figures 4-7 show a perspective view of possible programmable units that may be used in said system;
figure 8 shows a perspective view of a rain sensor that may be used in said system;
figure 9 schematically shows a plan view of the control module present in the various programmable units of the irrigation system;
figure 10 shows the block diagram of the electronic circuit of the programmer;
figure 11 shows the block diagram of the electronic circuit of the control module of a programmable unit;
figure 12 shows the block diagram of the electronic circuit of the communication module of a rain sensor.

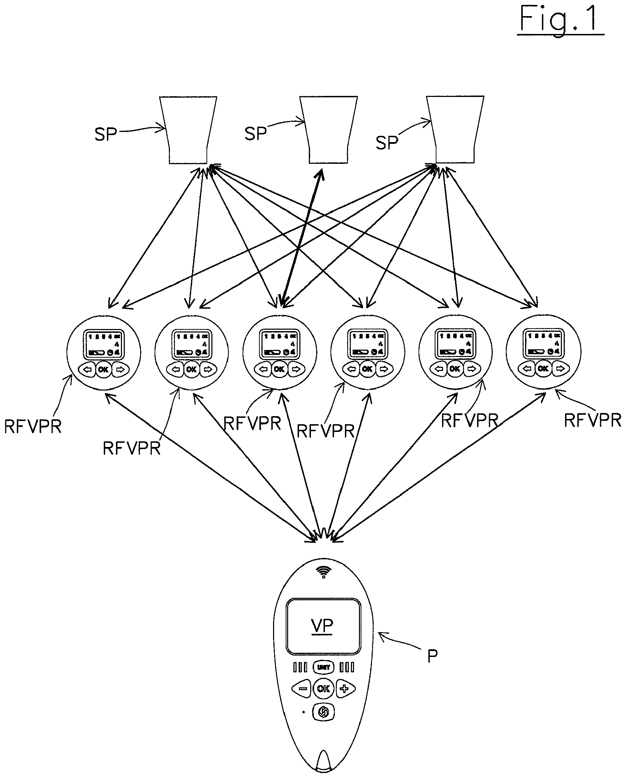

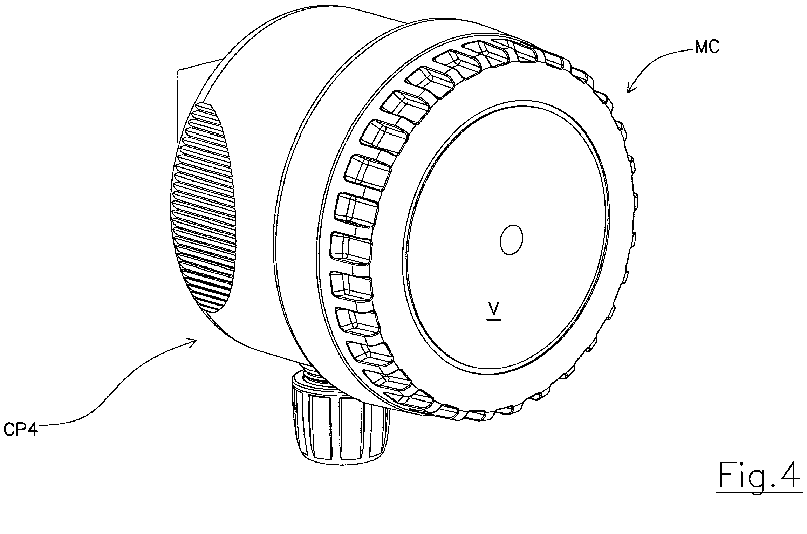

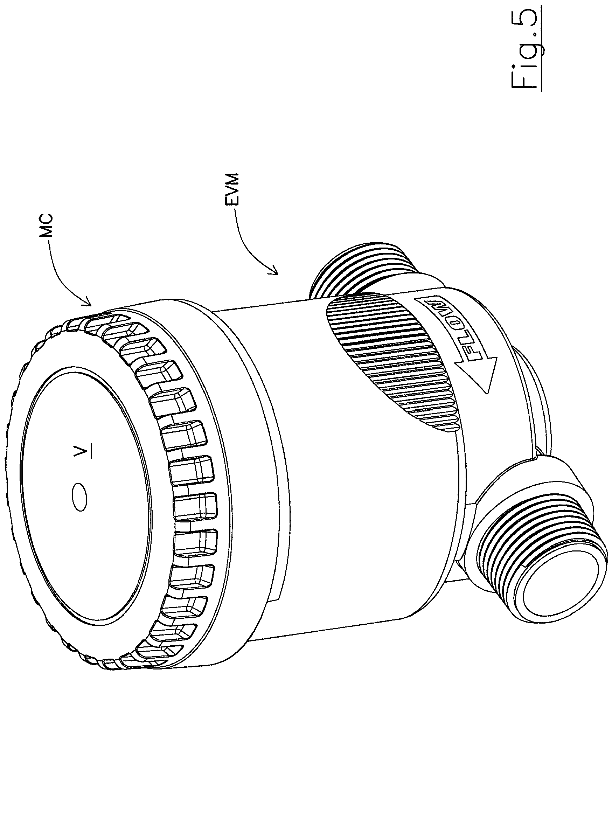

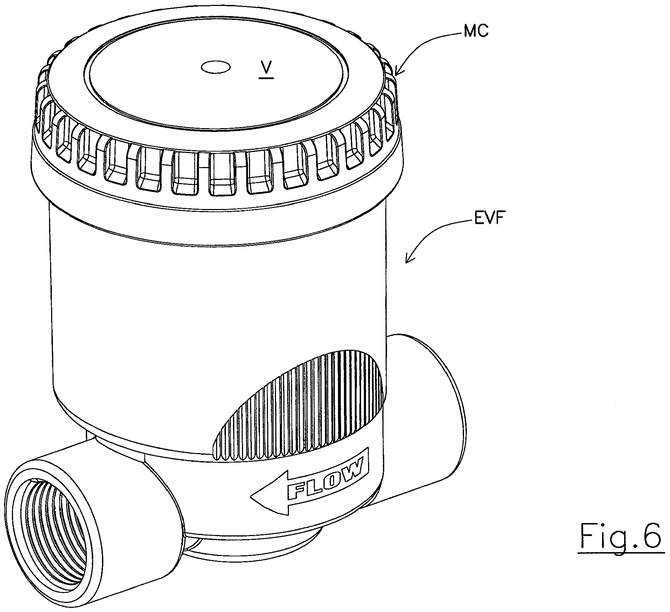

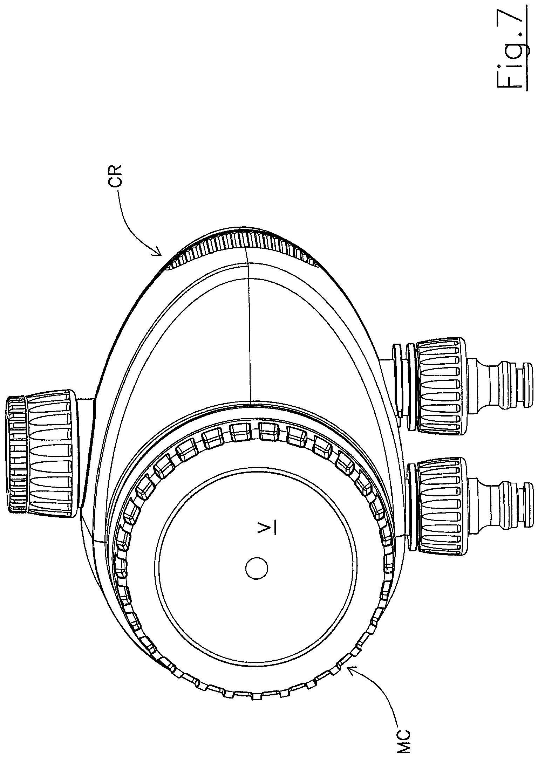

A possible general layout of the radiofrequency system, by way of example shown in figure 1, comprises a centralized radio control or programmer P which is capable of generating radiofrequency programming controls for a plurality of RF programmable units VPR (by way of example in a number of six) previously associated with the same programmer according to a procedure that will be described hereafter. RF programmable units VPR may be of the types shown in figures 4-7, which respectively show a four-way programmable control unit, globally indicated as CP4, which is capable of managing the operation of four solenoid valves independent of each other, one programmable male solenoid valve, globally indicated as EVM, one programmable female solenoid valve, globally indicated as EVF, and one tap control unit, globally indicated as CR, which is directly connectable to a tap and is capable of managing two separate and independent lines. The programmable solenoid valves may be of the type described in EP-A-2308284.

Each one of said programmable units is provided with a radiofrequency control module MC which, once the irrigation program has been acquired from the programmer via radiofrequency, is capable of executing the irrigation program autonomously.

Each control module MC is also provided with keys (not shown in figures 4-7) to allow the user to carry out manual opening and closing of the solenoid valves, as well as a display V, preferably identical in all programmable units, to allow direct displaying of some basic functions on the control module, as will be explained in detail hereafter.

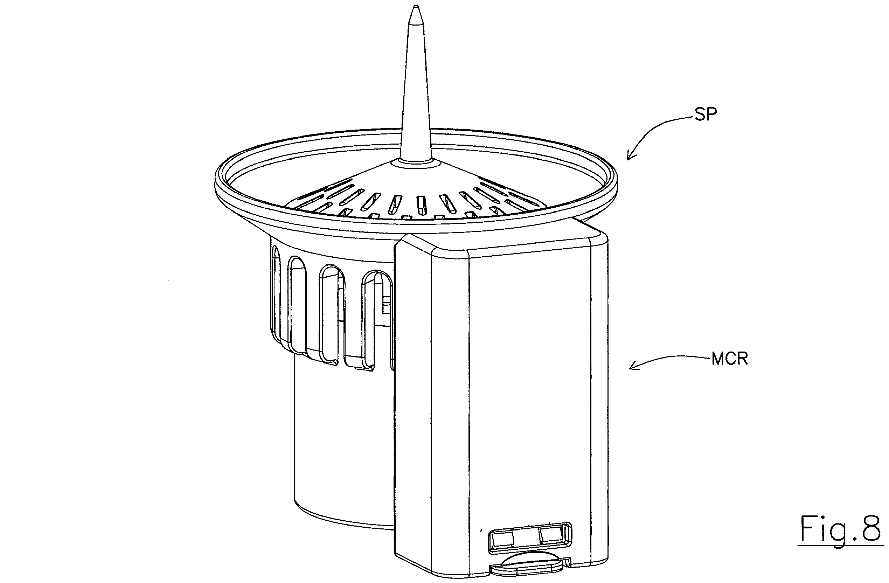

Finally, rain sensors SP are provided, associable with the RF programmable units VPR in universal or dedicated mode, which are preferably of the type shown in figure 8, where the rain sensor is provided with a radiofrequency communication module MCR. Besides said module, the rain sensors SP are made and operate as described in EP-A-1031856.

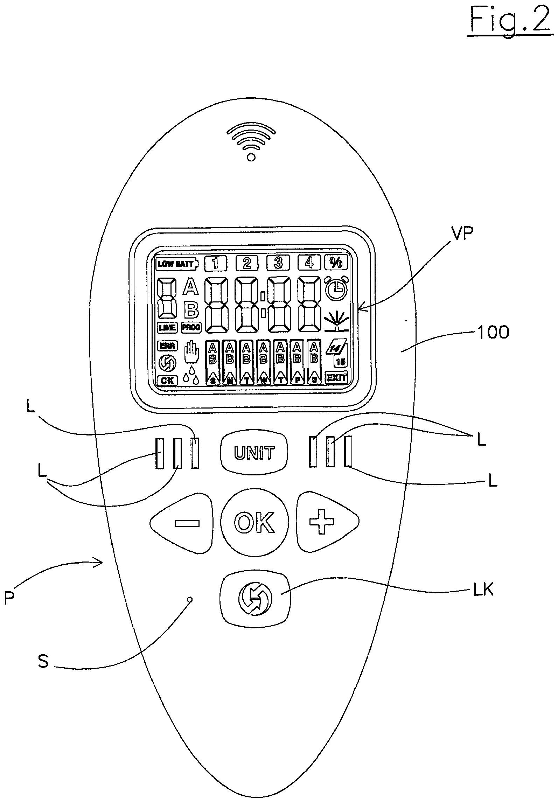

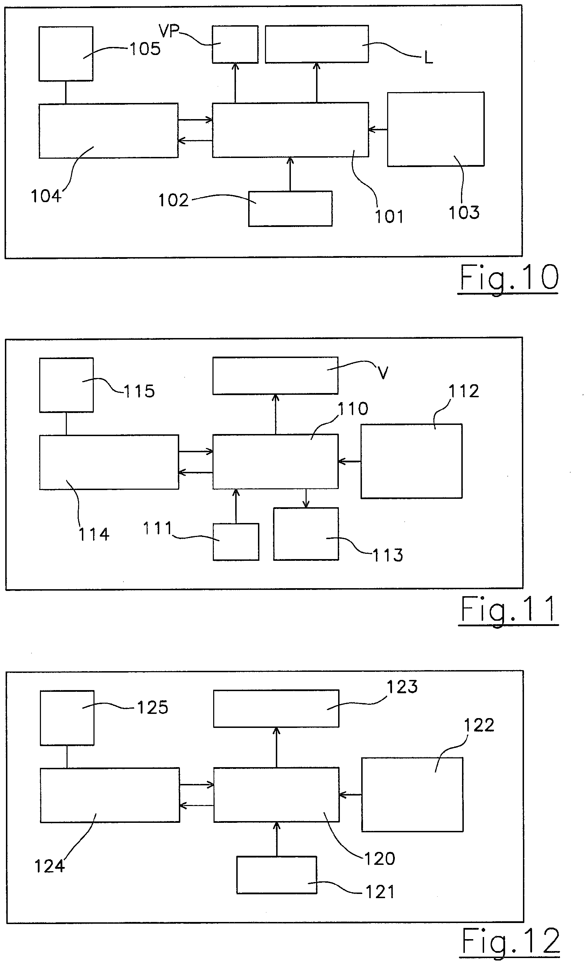

Going back to the radio control or programmer P, figure 2 shows the front face of a two half-shell box-shaped body 100 which therein comprises an electronic circuit (shown in figure 10 and described hereafter), battery-powered, which is intended for the remote control of the irrigation system. Said front face comprises a UNIT key for selecting the RF unit VPR to be programmed, six LED L adapted to indicate the programmable unit selected each time, + and - keys usable for editing the settings of the irrigation program of the selected unit, an OK key for enabling and confirming the programming edits, or for executing manual operations, and a dual arrow key LK (connection symbol) which serves for activating the radiofrequency connection between programmer P and the single RF programmable units VPR in order to transfer the program created on the radio control to the control modules MC of the programmable units. A further key S is also provided, accessible via a pointed object for associating programmer P with a new RF unit VPR or replacing an existing one with a new one.

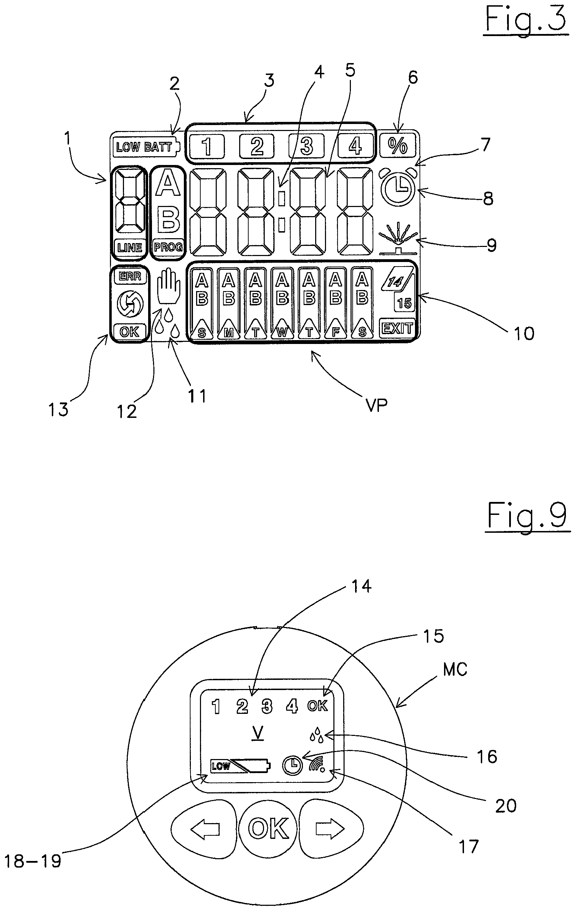

The front face of programmer P is further provided with a liquid crystal display VP (figure 3) which is able to present various visual indications described hereafter.
**1. LINE and UNIT IDENTIFICATION** symbol
   The **"LINE"** symbol reminds that the superimposed digit indicates the line (solenoid valve) on which you are working. Moreover, the same digit is used for identifying the number of the RF unit VPR on which you are working.
**2. LOW BATT** symbol and wording
   This symbol applies to all the devices controlled by the radio control programmer P: 1 to 6 RF units VPR, 1 to 6 rain sensors SP, 1 radio control P (itself).
   This symbol turns on when the battery voltage of the reference device drops to a predetermined value. It is possible to know the device the LOW BATT symbol refers to based on the page on which it is shown, if required: for the radio control, it is the page where current day and time are shown; for the RF unit PVR it is the unit selection page; for the radiofrequency rain sensor it is the sensor enabling page for the selected unit.
**3. START TIME NUMBER**
   The numbers relating to this section of the display indicate the start time number of the irrigation cycles during the irrigation parameter programming step.
**4. COLON symbol**
   It is used for separating the four main digits, with intermittent lighting for signaling the clock operation.
**5. FOUR MAIN DIGITS**
   These are the main four digits used for representing each time the values set or being edited. In addition, they are used for specifying some conditions, such as for example On and OFF.
**6. BUDGET** symbol
   This symbol may be used for editing the irrigation times in a unique manner using a percentage.
**7. ALARM CLOCK** symbol
   This symbol is only used together with the CLOCK symbol to indicate that a start time is being displayed.
**8. CLOCK** symbol
   This symbol is used when the current time is displayed or together with the ALARM CLOCK symbol, when a start time is displayed.
**9. IRRIGATION** symbol
   When the IRRIGATION symbol is fully on, it indicates that the time set corresponds to the irrigation time of the selected line. When the irrigation symbol turns on in a sequence from the center to the periphery, during the manual radio control operations of activation of one of the lines of the selected unit it indicates that the time displayed is the residual time of the irrigation in progress.
**10. DAYS** symbols
   These symbols are used for setting the current days and setting the irrigation days for Program A and Program B.
**11. RAIN** symbol
   This symbol is used both for associating a rain sensor with an RF unit VPR in a dedicated page for each unit, and for informing that the last time that the radio control P and the RF unit VPR were synchronized, the sensor indicated rain in the unit selection page. To have the current status you need to synchronize with the unit again.
**12. HAND** symbol
   This symbol is used during manual radio control operations for activating a line of the selected unit.
**13. RF, OK and ERR** symbols
   The **RF** and **ERR** symbols are used during the RF communication steps with the on-site unit. The RF symbol basically has the meaning of synchronization between the radio control and the unit.
   The **OK** symbol is used to indicate that the parameters shown on display VP may be edited by the +/- keys and to exit the editing page.
   The electronic circuit of programmer P is shown as a block diagram in figure 10 and comprises a microcontroller 101 powered with batteries 102. Microcontroller 101 is controlled by the various keys provided on the front face of the programmer (combined in figure 10 under reference numeral 103) and in turn controls display VP and LED L. Moreover, microcontroller 101 two-directionally communicates with a two-way radio 104 provided with antenna 105.
   The front face of the various control modules MC of the RF programmable units VPR is in turn shown in figure 9, where a liquid crystal display V is seen, comprising some visual indications that are described hereafter:
   **14. 1, 2, 3 and 4** symbols
      Indicate the selected (symbol on, flashing light) or active output (symbol on, solid light).
   **15. OK** symbol
      Indicates that the selected valve is active in manual mode and that the OK key may be pressed to deactivate it.
   **16. Rain** symbol
      Indicates the rain sensor SP status associated with the programmable unit, but only if the rain sensor has been enabled by the radio control. The possible states of the **Rain** symbol are:
      **Off:** rain sensor not active for the programmable unit or empty sensor because dry.
      **On:** rain sensor active for the programmable unit and full sensor for rain. In this condition, any programs active when the symbol turns on are interrupted and other programs are prevented from starting automatically until the symbol remains on. It does not affect the local manual operations from RF units VPR or remote ones from radio control P.
      **Flashing:** rain sensor active for the programmable unit but:
         a) sensor battery exhausted;
         b) absence of the sensor that has not been "sensed" by the programmable unit for more than 24 hours;
         c) insufficient radiofrequency.
            To prevent an RF unit VPR from being purchased without wanting to use it in association with a rain sensor, while the RF unit VPR is by default enabled to sense the rain sensor, the **Rain** symbol will not flash in the absence of a rain sensor if the RF unit VPR has not recognized the signal thereof at least once. This prevents a useless flashing of the **Rain** symbol if the rain sensor has not been used and therefore has not been "sensed" for more than 24 hours. When it is "sensed" again, the condition switches to **Off** or **On.**
   **17. RF** symbol
      Indicates a communication in progress with the radio control. In data transfer or manual start step after connection: **flashing green;**
      In association step:
      - **flashing red** until the connection with the radio control is established;
      - **solid red** during the association step with the radio control.
   **18. LOW BATT** symbol **(red): Battery to be replaced**
      **Flashing with at least another symbol on at the same time** While the battery has sufficient energy for operating, it is about to become exhausted, replacement thereof is therefore recommended.
   **19. LOW BATT** symbol **(red): Battery exhausted**
      **Flashing with no other symbol on at the same time**
      The battery is exhausted and the RF programmable unit VPR is not operating.
   **20. CLOCK** symbol
      This will be on in a different way according to the condition of the control module of the RF programmable unit VPR:
      **■ Solid red:**
         the RF unit VPR has never been associated with the radio control and will not automatically irrigate. Manual irrigation is possible.
      ■ **Alternating green/red:**
         the RF unit VPR has been associated with the radio control but will not automatically irrigate since all its programs are Off.
         Manual irrigation is possible.
      **■ Flashing green:**
         the RF unit VPR has been associated with the radio control and will automatically irrigate but the starts may not be synchronized with those set on the radio control, and therefore random, while correctly maintaining the times set. Probable loss of the time due to a too extended battery change. Manual irrigation is possible.
      ■ **Solid green:**
         the RF unit VPR has been associated with the radio control and will automatically correctly irrigate. Manual irrigation is possible.
         All the manual operations on the RF unit VPR interrupt and prevent the activation of any automatic irrigation cycles.

The control module MC of the RF programmable unit VPR is further provided with 3 keys indicated with arrows in opposite directions ("→" and "←" keys) and with the OK symbol. They allow local manual operations to be carried out directly from the RF unit VRP

More precisely, the temporary pressure of one of the "→" and "←" keys allows the circular scrolling of the numbers corresponding to the solenoid valves and the temporary pressure of the OK key allows the manual intervention for changing the status of the selected solenoid valve.

Pressing and holding for a few seconds the "→" and "←" and OK keys at the same time starts the operation for associating the RF unit VPR to radio control P, as described hereafter.

Pressing and holding the OK key starts the operation for associating the control module of the RF unit VPR to a sensor SP in dedicated mode, as explained hereafter.

Figure 11 shows a block diagram of the electronic circuit of a control module MC, equal for all the FR programmable units VPR. The circuit comprises a microcontroller 110 powered with batteries 111 and controlled by the various keys provided on the front face of the programmer (combined in figure 11 under reference numeral 112) and in turn controls display V of the RF unit VPR and one or more solenoid valves 113. Moreover, microcontroller 110 two-directionally communicates with a two-way radio 114 provided with antenna 115.

Figure 12 in turn shows a block diagram of the electronic circuit of the radiofrequency communication module MCR of a rain sensor SP. The circuit comprises a microcontroller 120 powered with batteries 121 and controlled by a "rain - dry" switch 22 of the type described in EP-A-1031856. Microcontroller 120 in turn controls a LED display 123 and two-directionally communicates with a two-way radio 124 provided with antenna 125.

Having therefore explained the features of the single components (radio control P, RF programmable units VPR and rain sensors SP), it is now possible to describe the general operation of a radiofrequency irrigation system according to the present invention.

The basic package includes a radio control P and an RF programmable unit VPR which are previously associated at the factory. In this way, the user needs not carry out the association operation at the first installation, but only when he/she wants to add new RF units VPR.

At the first programming, the radio control synchronizes the clock of the RF unit VRP (clock symbol on display V) and transmits the user program. At each programming, the RF unit VPR sends information about its status to the radio control: VPR battery level, SP rain sensor battery level and "full" or "empty" status of the rain sensor.

Until the first programming has not been carried out, the RF unit VPR will not automatically execute any programs but it will be possible to manually start the outputs from the same RF unit VPR.

For the further RF units VPR it will be necessary to first proceed to its association with radio control P.

By association between radio control or programmer P and RF unit VPR it is meant an operation that involves a two-directional communication between the programmer and the unit, at the end of which the programmer knows the identity code or "ID" of the unit on which it can operate and the unit is programmed with parameters of two types:
1) parameters related to the unit functionality, and
2) parameters related to mere irrigation.

However, it should be noted that during the association step, the only actually necessary parameter is the ID of the RF unit VPR which the same must communicate to the programmer, which will in turn associate it with one of its internal logical units, from 1 to 6. The irrigation parameters may be sent by the programmer to the RF unit VPR also through the programming operation that will be the most frequently used one. In other words, the association only serves in the system configuration or modification step.

Taking advantage of the two-directional communication in progress for the association, programmer P also sends the irrigation parameters to the RF unit VPR, in particular: the current week day and time, the enabled or disabled operation with a rain sensor, the general enabling of single irrigation programs (A and B), the irrigation times for each solenoid valve, the starting times of an irrigation cycle and the days enabled for irrigation.

The operation of associating the control module MC of an RF unit VPR to a programmer P consists in activating the following procedure:
a) setting the control module MC to transmission by the concurrent pressing of the "→" and "←" and "OK" keys for a few seconds until the clock and RF symbols turn on flashing;
b) the RF unit VPR transmits a radiofrequency signal awaiting for programmer P to be associated to recognize the signal once the association has been started on it as well;
c) selecting one of the units available on programmer P by pressing the UNIT key;
d) starting the association, within a limit time from the setting of the control module MC to transmission, by pressing the protected key S with a pointed object, such as a clip;
e) waiting for a confirmation of the successful association checking the absence of the error symbol "ERR" right above the "RF" symbol.

During the step of associating a new RF unit VPR, the clock of the RF unit VPR is synchronized, the irrigation program stored to radio control P is transferred and the optional activation of the use of a rain sensor SP is carried out.

The clock symbol will be on in a different way according to the condition of the RF unit VPR.

In addition to the association it is also possible to carry out a new programming of an RF unit VPR for just the irrigation parameters described above.

The operation of programming a control module MC from programmer P consists in activating the following procedure:
f) standing at a distance of not more than a few meters from the RF unit VPR;
g) selecting the logical unit to be programmed on programmer P by pressing the UNIT key;
h) starting the programming by pressing the LK key;
i) waiting for a confirmation of the successful programming checking the absence of the error symbol "ERR" right above the "RF" symbol.

The rain sensors may be used in two modes managed by the RF programmable units VPR and independent of the same rain sensors.

### • Universal

In this mode, associating the sensor with the RF programmable unit VPR is not required, thus simplifying the installation and use thereof. This is the default mode for the RF unit VPR.

### • Dedicated

In this mode, the sensor must be associated with the single RF unit VPR. In this way it is possible to prevent two rain sensors with a close radiofrequency rate from affecting the behavior of programmable units not controlled by the same radio control.

By association of the rain sensor it is meant an operation that involves a unidirectional communication from the rain sensor RF to the RF unit VPR, wherein the rain sensor RF communicates its unique "ID" to the RF unit VPR. With this information, the RF unit VPR disables its universal mode and enables the dedicated one with which it accepts and processes information about the "rain" or "dry" status from the known rain sensor RF. Therefore, the rain sensor RF simply communicates its ID to the outside world but per se, the rain sensor RF does not know whether the association was or not successful.

The association step between RF unit VPR and rain sensor SP in dedicated mode envisages for the following steps:
○ with the rain sensor SP and the RF unit VPR at a distance not higher than a few meters, the batteries are installed into the rain sensor, which will start transmitting the data required for the association for a few minutes. During this step, the sensor LED flashes once every 2 seconds to differentiate this step from that of standard operation during which the LED flashes once every 5 seconds in order to reduce consumptions.
○ right afterwards, the OK key of the RF unit VPR must be pressed and held a few seconds;
○ all the LEDs of the RF unit VPR are turned off;
○ the RF unit VPR sets to radiofrequency reception awaiting to be associated with the sensor:

The association step ends as follows:
- if the association was successful, the Rain symbol of the RF unit VPR starts flashing; releasing the OK key generates a reset that returns the RF unit VPR to the condition present before the same association started.
- if the association fails, the Rain symbol of the RF unit VPR stays off and the association can end in one of the following ways:
   ○ after a predetermined timeout from the start of the same association;
   ○ by the user releasing the OK key before the timeout.

In both cases, a reset is generated which returns the RF unit VPR to the condition present before the start of the association.

During the operation of the irrigation system, each rain sensor SP will send information about its status to the RF units VPR:
- at each Empty-Full and Full-Empty status change of the rain sensor and for further consecutive transmissions at a distance of a few minutes from each other,
- once every 24 hours starting from the first start up or starting from the first one of the status change-related transmissions.

At every single transmission, the rain sensor will transmit the following information in broadcasting mode:
- its unique ID;
- the Full or Empty status relating to the new Rain or Non Rain condition;
- the battery level as "charged" or "to be replaced".

To prevent any concurrent transmissions of two or more radiofrequency sensors, before transmitting, each sensor will ensure that there are no other devices transmitting on frequency 433 MHz and will wait for the condition of absence of external signals.

## Claims

1. A remote control irrigation system **characterized in that** it comprises a centralized radio control programmer (P) adapted to generate radiofrequency programming controls and a plurality of programmable units (RF VPR) provided with a radiofrequency control module (MC) adapted to receive and execute said programming commands and to communicate its status to said centralized programmer (P).

2. An irrigation system according to claim 1, **characterized in that** it comprises at least one radiofrequency rain sensor (SP) associated with said programmable units (RF VPR) in a dedicated or universal manner.

3. An irrigation system according to claim 1, **characterized in that** said programmer (P) comprises a display (VP), a key (UNIT) for selecting the unit (RF VRP) to be programmed, a plurality of light indicators (L) indicating the programmable unit (RF VRP) each time selected, programming keys including keys (+, -) for editing the programming and a key (OK) for enabling and confirming the edit, and a key (LK) of connection to the unit (RF VPR) to be programmed.

4. An irrigation system according to claim 3, **characterized in that** the programmer (P) comprises a further key (S) accessible via a pointed object for associating the programmer (P) with a new RF unit VPR or replacing an existing one with a new one.

5. An irrigation system according to claim 3, **characterized in that** said display (VP) comprises symbols indicating line and programmable unit (1), battery exhausted (2), start times (3), values set or being edited (4, 5), budget (6), alarm clock (7), clock (8), irrigation (9), days (10), rain (11), manual activation (12) and communication (13) between the radio control (P) and the programmable unit (RF VPR).

6. An irrigation system according to claim 1, **characterized in that** the control module (MC) of each programmable unit (RF VPR) comprises keys (→ and ←) for editing the programming, a key (OK) for enabling and confirming the edit and a display (V) including symbols of selected or active output (14), OK key (15) enabling, rain (16), rain sensor (17) status, battery exhausted (18, 19) and clock (20).

7. An irrigation system according to claim 2, **characterized in that** the rain sensor (SP) comprises a radiofrequency communication module MCR.
